# NEUE EUROPÄISCHE PATENTSCHRIFT

(11) **EP 2 960 585 B2**
(45) Veröffentlichungstag und Bekanntmachung des Hinweises auf die Entscheidung über den Einspruch: **31.08.2022**
(45) Hinweis auf die Patenterteilung: 16.05.2018
(21) Anmeldenummer: 15177566.5
(22) Anmeldetag: 21.03.2014
(51) Int. Cl.: F24D 3/16

(54) **WAND- ODER DECKENVERKLEIDUNG UND MODUL MIT EINER SOLCHEN**
WALL OR CEILING CLADDING
REVETEMENT DE MUR OU DE PLAFOND

(30) Priorität: 22.03.2013 DE 102013102990
(43) Veröffentlichungstag der Anmeldung: 30.12.2015
(62) Teilanmeldung aus: 14161125.1
(73) Patentinhaber: Bühler, Armin, 87733 Markt Rettenbach (DE)
(72) Erfinder: Bühler, Armin, 87733 Markt Rettenbach (DE)
(74) Vertreter: Patentanwälte Olbricht, Buchhold, Keulertz Partnerschaft mbB

(56) Entgegenhaltungen:
- EP-B1- 0 955 503
- WO-A1-2011/033324
- DE-A1- 3 919 143
- DE-A1- 19 803 114
- DE-A1-102008 020 422
- DE-U1-202010 016 878
- NL-A- 9 002 091
- US-A1- 2008 264 602

## Beschreibung

Die Erfindung betrifft eine Wand- oder Deckenverkleidung mit einem Kühl- und/oder Heizungssystem, insbesondere einer Decken-, Sockel- oder Fußbodenheizung, wobei die Wand- oder Deckenverkleidung mit wenigstens einem Halterungsprofil an der Wand oder Decke eines Bauwerkes befestigbar ist.

Derartige Wand- oder Deckenverkleidungen, mit einem Kühl- und/oder Heizungssystem, insbesondere einer Decken-, Sockel- oder Fußbodenheizung, sind bekannt. In Gebäuden, insbesondere Büro- und Gewerbegebäuden, werden häufig abgehängte Decken montiert. Diese Decken werden zunehmend als Heiz- und/oder Kühldecken ausgebildet. Aber auch akustisch wirksame, insbesondere akustisch absorbierende Decken werden mit gleichen oder ähnlichen Systemen montiert. Derartige Decken können selbstverständlich auch thermisch aktiviert werden und werden dabei kombiniert als Schallschutzdecke mit thermischer Aktivierung eingesetzt. Daneben sind auch noch einfache Deckensysteme zur Gestaltung der Decke oder als Installationsebene zur Aufnahme von Installationen bekannt. Dabei bestehen diese Installationsdecken in einigen Fällen aus einzelnen Platten, die meist ohne feste Verbindung in ein Rahmengerüst eingelegt werden. Die Ausführung der bekannten Systeme ist im Grundprinzip meist gleich. Ein Feinrost wird entweder direkt beziehungsweise mit Direktabhängern an einer Decke, einem Dach oder an einer Wand beziehungsweise, im Falle von abgehängten Decken, an einem Grobrost befestigt. Dieser Grobrost wird seinerseits zum Beispiel an einer Betondecke oder Wand mittels in der Länge verstellbaren Drähten oder Blechen befestigt. Nach der Montage des Tragrostes beziehungsweise der Unterkonstruktion werden je nach Aufgabenstellung Platten in den Rost eingelegt oder platten- beziehungsweise paneelförmige Bekleidungen an dem Rost befestigt.

Wenn die plattenförmigen Bekleidungen als Gipskartonsysteme ausgebildet werden, müssen diese noch gespachtelt und geschliffen werden. Insgesamt sind die Arbeiten für das Bekleiden der Decken sehr aufwendig. Auch ist die Integration von Rohrregistern für Kühl- und Heizleitungssysteme äußerst kompliziert, was dazu führt, dass dafür gegebenenfalls zusätzliche Halterungen vorgesehen sein müssen oder aber das Rohrregister auf die Halterung für das Platten- beziehungsweise Paneelbedeckungssystem aufgelegt beziehungsweise aufgeklemmt werden. Im Falle einer Undichtigkeit eines Rohrleitungssystems kann es dazu führen, dass die gesamte Deckenverkleidung inklusive der Unterkonstruktion demontiert werden muss, um an das Rohrleitungsregister heranzukommen, um gegebenenfalls beschädigte Stellen auszuwechseln und/oder zu reparieren. Dieser Aufwand ist enorm hoch und es gibt derzeit keine Systeme, die es ermöglichen, dass man direkt ohne Demontage der Unterkonstruktion an das Rohrleitungsregister herankommt. Insgesamt sind auch die Arbeiten für das Bekleiden der Decken sehr aufwendig, insbesondere dann, wenn die Oberflächen gleich mehrere Eigenschaften aufweisen sollen, wie beispielsweise Kühl- oder Wärmestrahlung, Schallabsorbierung und so weiter.

Aus der Druckschrift DE 39 19 143 A1 ist ein flächenförmiges Wärmeaustauschelement zum Heizen und Kühlen von Räumen bekannt. Dieses Wärmeaustauschelement besteht aus einem Metallblech und einem von einen Wärmeaustauschmedium durchflossenen Strömungskanal, dass auf einer Wand, dem Boden oder der Decke eines Raumes aufgebracht ist. Dabei sind die Strömungskanäle in das Metallblech beim Herstellungsprozess integriert.

Aus der Druckschrift DE 20 2010 008 798 U1 ist eine Verlegeplatte für Fußboden- oder Wandheizleitungen bekannt. Die Verlegeplatte ist dabei eine Faserzementplatte, beispielsweise eine Platte aus faserarmierten Leichtbeton. Dabei lassen sich zwei derartige Verlegeplatten aneinander legen, wobei im Randbereich Ausnehmungen vorhanden sind, in die ein Rohrleitungsregister eingelegt werden kann.

Aus der Druckschrift DE 20 2010 010 566 U1 ist ein Deckenaufbau bekannt, umfassend beabstandete Tragschienen, an deren Unterseite ein plattenförmiges Deckenelement befestigt ist. Die Tragschienen sind dazu geeignet, Querriegel aufzunehmen, an deren Unterseite ein Wärmeleitblech befestigt ist. Der gesamte Aufbau des Deckenaufbaues ist sehr kompliziert und bei der Montage äußerst zeitaufwändig. Das Aneinanderfügen der Wärmeleitbleche ist nur mit Hilfe der Querriegel möglich, wobei Flächenverluste für die Wärme-bzw. Kühlübertragung entstehen.

Aus der Druckschrift US 6,283,382 B1 ist eine Montageplatte zur Sicherung der Leitung eines Heizungssystems bekannt. Dabei handelt es sich eindeutig um ein Element für eine Fußbodenheizung. Die Fachwelt geht auch heutzutage immer noch überwiegend davon aus, dass Fußbodenheizungen bezüglich des Wärmeeffektes bessere Ergebnisse bringen, als beispielsweise eine Wand- oder Deckenheizung nach dem Wärmestrahlungsprinzip. Die Montageplatte ist nicht dazu geeignet, an einer Wand oder Decke eines Raumes angeordnet zu werden.

Eine Wand- oder Deckenverkleidung der genannten Art ist im Stand der Technik auch aus EP 2 006 608 A2 bekannt. Bei der Wand- oder Deckenverkleidung weist ein Halterungsprofil auf der zu dem zu kühlenden beziehungsweise zu heizenden Raum zugewandten Seite ein Aufnahmemittel für das Rohrleitungsregister des Kühl- und/oder Heizungssystems auf, dessen Aufnahmeöffnung dem Raum zugewandt ist.

Das Dokument DE 1 912 396 zeigt eine Deckenstrahlungsheizung oder -kühlung, bei welcher Streifen aus Aluminiumblech oder ähnlichen Materialien zwischen einem Heizregister vorgesehen sind. Ein Rohr des Rohrleitungsregisters kann dabei in einen Aufnahmeraum aufgenommen werden, welcher einer Decke oder Wand zugewandt ist, an welcher die Deckenstrahlungsheizung befestigt ist.

Das Dokument DE 39 19 143 A1 zeigt ein flächenförmiges Wärmeaustauscherelement zum Heizen und Kühlen von Räumen. Das Wärmeaustauscherelement besteht aus einem Metallblech, in das beim Herstellungsprozess Strömungskanäle integriert sind, die mit dem Metallblech eine Einheit bilden.
Das Dokument WO 2011/033324 A1 offenbart ein Thermo-Rahmenelement mit Kanälen zur Aufnahme eines Rohrleitungsregisters, wobei die Kanäle als Vertiefungen in einem massiven Material ausgebildet sind.

Eine Einschränkung beim bisherigen Stand der Technik besteht darin, dass die Wand- oder Deckenverkleidung aus Fertigungs- und Transportgründen in der Regel modular aufgebaut ist, das heißt aus mehreren einzelnen Profilen besteht. Beim Aneinanderfügen von zwei solchen Profilen ergibt sich dann ein Zwischenraum zwischen den Profilen, wodurch sich Wärmesenken in der Gesamtdeckenfläche ergeben und damit der Wärme- beziehungsweise Kühleintrag in einer solchen Klimadecke natürlich erheblich beeinträchtigt wird.

Aufgabe der Erfindung ist es daher, die gattungsgemäße Wand- oder Deckenverkleidung mit einem Kühl- und/oder Heizungssystem weiterzubilden. Die Weiterbildung kann insbesondere darin bestehen, dass die Wand- oder Deckenverkleidung besonders vorteilhaft fertigbar ist und/oder ein besonders guter Wärmeübertrag von einem Rohrleitungsregister zu einem Halterungsprofil vorgesehen ist.

Die Aufgabe der Erfindung wird gelöst durch eine Wand- oder Deckenverkleidung mit den Merkmalen des Anspruchs 1.

Im Rahmen dessen weist das Rohrleitungsregister wenigstens einen geraden Abschnitt auf, der mit dem Aufnahmemittel in dem Halterungsprofil fest zu einem integralen Bauteil verbunden ist.

Dies ermöglicht einen besonders vorteilhaften Wärmeübertrag von dem Rohrleitungsregister zu dem Halterungsprofil.

Erfindungsgemäß ist vorgesehen, dass der Abschnitt des Rohrleitungsregisters und das Halterungsprofil ein gemeinsames Profil bilden, welches in einem einzigen Fertigungsprozess, nämlich im Strangpressverfahren, herstellbar ist. Der Abschnitt ist vorzugsweise als Rohr ausgebildet.

Dies erlaubt eine besonders einfache Herstellung.

Erfindungsgemäß zeichnet sich die Wand- oder Deckenverkleidung dadurch aus, dass das Halterungsprofil an zwei gegenüberliegenden Seitenflächen, die sich parallel zu dem ersten Aufnahmemittel erstrecken, eine jeweils konkave sickenartige Ausgestaltung aufweist, so dass zwischen zwei benachbarten Halterungsprofilen ein zweites Aufnahmemittel für das Rohrleitungsregister des Kühl- und/oder Heizungssystems gebildet wird, dessen Aufnahmeöffnung dem Raum zugewandt ist. Die sickenartige Ausgestaltung der gegenüberliegenden Seitenflächen ist insbesondere konkav mit Bezug auf Aufnahmemittel ausgebildet. Bei dem Kühl- und/oder Heizungssystem handelt es sich bevorzugt um eine Decken-, Boden-, Wand- oder Sockelheizung/-kühlung.

Im Gegensatz zu allen anderen bekannten Lösungen ist es jetzt möglich, das Rohrleitungsregister in mehrere Module beziehungsweise Halterungsprofile zu unterteilen, ohne dass es bei der Installation der Wand- oder Deckenverkleidung zu Wärmesenken an den Schnittstellen der einzelnen Profile kommt.

Im Stand der Technik ging man bisher davon aus, das Rohrleitungsregister in die Halterungsprofile einzuschieben, sodass ein leichter Zugang zu dem Rohrleitungsregister des Heizbeziehungsweise Kühlsystems möglich ist. Jetzt wird der Aufwand der Montage dadurch erheblich reduziert, dass das Rohrleitungsregister in das Halterungsprofil in einzelne Module für die späteren Deckplatten oder Deckbahnen zu integrieren und die Module nachträglich einzeln zu montieren, wobei dann weitere Rohre zwischen den Halterungsprofilen eingesetzt werden können und somit Wärmesenken beseitigt werden. Damit wird sowohl der Aufwand für die Montage als auch der Materialaufwand der Unterkonstruktion insgesamt verringert. Die Wand- oder Deckenverkleidung nach dieser Weiterbildung der Erfindung eröffnet dabei eine Reihe von Möglichkeiten für einfache Montagen für die Deckplatten beziehungsweise Deckbahnen, die den Aufwand für eine solche Wand- oder Deckenverkleidung insgesamt verringert. Auch der Aufwand für die Unterkonstruktion, falls erforderlich, wird reduziert. In einer bevorzugten Ausgestaltung wird das Halterungsprofil direkt in die Deckenkonstruktion eingebunden beziehungsweise direkt an dieser angeordnet, wodurch der Aufwand für die Montage in erheblichem Masse reduziert wird.

Die Montagezeiten verkürzen sich enorm. Noch besser als im Stand der Technik ist es jetzt möglich, ein Deckenheiz- bzw. Kühlsystem modulartig aufzubauen. Dabei sind die einzelnen Elemente aufgrund ihrer Abmessungen leicht zu handhaben und insbesondere leicht aneinander zu fügen. Montagefehler werden nahezu vollständig vermieden.

Durch die direkte Montage, werden Aufbauhöhen von wenigen Millimetern bis Zentimetern, in einer bevorzugten Ausführungsform von maximal 3cm möglich. Die Aufbauhöhe richtet sich hierbei lediglich nach der Dimension der Rohre, die im Inneren aufgenommen sind. In den Bau- bzw. Aufbauformen, welche durch das entsprechend ausgebildete Halterungsprofil ermöglicht werden, lassen sich aktiv installierte Flächen von 100 % (nach DIN EN und besser) erstellen. Als günstig wird angesehen, wenn das Profil bevorzugt rückseitig, d.h. auf seiner von der Rauminnern abgewandten Seite, kühlrippenartige Strukturen aufweist. Diese verbessern die Heiz- bzw. Kühlwerte wesentlich. Dies erweist sich insbesondere dann als von Vorteil, wenn aktiv/passiv hinterlüftete Decken und/oder Deckensegel bzw. -segmente vorgesehen sind.

Ebenfalls möglich wird die Anordnung der Profile derart, dass keine weitere Verkleidung bzw. Beschichtung notwendig ist. Es kann dann eine Decken- und/oder Wandverkleidung nach Art einer Paneeldecke gebildet werden, die dennoch die Vorteile wie zuvor ausgeführt aufweist und die Möglichkeit zur Erstellung einer Wand-, Decken- oder Sockel Heizung gibt.

Die Lösung des Standes der Technik nach der DE 39 19 143 A1 schlägt im Gegensatz dazu ein flächenförmiges Gebilde als Deckenheizelement vor, welches mehrere Rohrleitungen aufweist. Dabei ist man offensichtlich an ein bestimmtes Raster gebunden, dass durch die Abmessungen der Platte vorgegeben wird. Die Erfindung ist im Gegensatz dazu dadurch gekennzeichnet, dass einzelne Elemente problemlos aneinandergefügt werden können, wobei die Abstände relativ gering gehalten werden. Dadurch wird die Heiz- bzw. Kühlfläche erheblich vergrößert. Mit dem wie hier beschrieben ausgebildeten Halterungsprofil lässt sich eine optimale Flächenausnutzung der zur Verfügung stehenden Flächen leicht erreichen.

Die Lösung nach der DE 20 2010 008 798 U1 ist als Verlegeplatte ausgestaltet, die aus Faserzement-Platten gebildet ist. Diese Platten sind ebenfalls eine bestimmte Rasterung gebunden, wodurch ein nicht unerheblicher Verlust bezüglich der Wärme- bzw. Kühl-Abstrahlfläche entsteht. Auch ist der Herstellungsaufwand für solche Platten sehr hoch. Ein modulartiges System, welches bezüglich der Raumgrößen variierbar ist, steht damit nicht zur Verfügung.

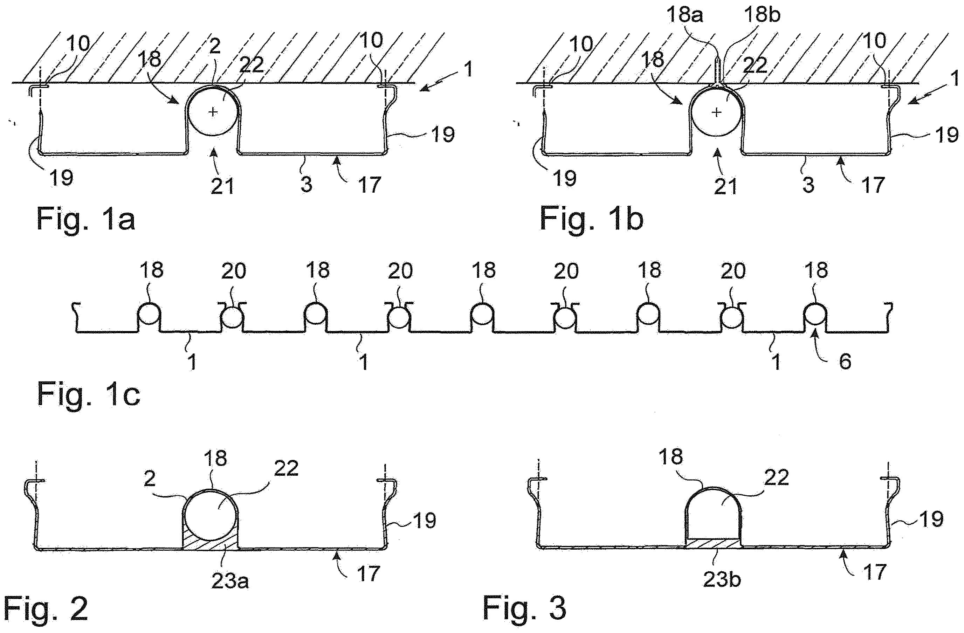

Eine vorteilhafte Weiterbildung der erfindungsgemäßen Wand- oder Deckenverkleidung zeichnet sich dadurch aus, dass der Abschnitt am Umfang mit dem Halterungsprofil zumindest teilweise thermisch wirksam verbunden ist, wobei eine Kontaktfläche am Umfang gebildet wird, die zwischen 50-100 % der Umfangsfläche des Abschnitts beträgt. Diese Ausgestaltung garantiert im Gegensatz zu allen Lösung des Standes der Technik, dass eine vollständige Wärme- bzw. Kühl/Kälteübertragung am gesamten Umfang des Rohrleitungsregisters im Bereich des Halterungsprofils erfolgt bzw. möglich ist. Damit wird eine erhebliche Erhöhung der Effektivität des gesamten Heizungs- bzw. Kühlsystems erreicht. Keine Lösung des Standes der Technik stellt ein modulartiges Halterungsprofil zur Verfügung, welches neben dem Vorteil der leichten und problemlosen Montage auch noch den Vorteil eines nahezu vollständigen Wärme- bzw. Kühlleistungs-übergangs ermöglicht. In der Zeichnung sind zwei Ausführungsformen gezeigt, die eine 100%ige Ausnutzung der zur Verfügung stehenden Umfangsfläche vorsehen (siehe Fig. 2 und 3).

Die Wand- oder Deckenverkleidung nach einer Weiterbildung der Erfindung zeichnet sich auch dadurch aus, dass das Halterungsprofil und/oder eine mit dem Halterungsprofil verbundene Unterkonstruktion thermisch aktivierbar sind. Damit ist eine weitere Erhöhung der Effektivität des gesamten Wärme-bzw. Kühlsystems erreicht. Die Abstrahlleistung erhöht sich durch diese Ausgestaltung weiter.

Ein weiterer Aspekt gemäß einer Weiterbildung der erfindungsgemäßen Wand- oder Deckenverkleidung ist dadurch angegeben, dass das Halterungsprofil mittels entsprechender Befestigungsmittel entweder direkt an einer Unterkonstruktion, wie zum Beispiel einer Wand, einem Fußboden, einem Sockel oder einer Decke, oder aber als abgehängte Konstruktion an der Unterkonstruktion anordenbar bzw. befestigbar ist und/oder ein Befestigungsmittel in einer Vertiefung des ersten Aufnahmemittels anordenbar ist. Keine der Lösungen des Standes der Technik, wie sie eingangs beschrieben, zeichnet sich dadurch aus, dass sie direkt, d.h. ohne entsprechende zusätzliche Unterkonstruktionen, auf einer Wand bzw. Decke eines Raumes von Bauwerken befestigt werden kann. Weiterer Vorteil ist der Gewinn an Raumhöhe, da eine sehr flache Konstruktion zur Verfügung gestellt werden kann.

Die Wand- oder Deckenverkleidung nach der Erfindung zeichnet sich in einer weiteren Variante dadurch aus, dass das Halterungsprofil an seiner Kante eine Abwinklung aufweist, mittels derer es an einer Decke oder Wand anlegbar, insbesondere befestigbar ist. Diese Ausgestaltung erleichtert die Montage des Wand- oder Deckenheizsystems erheblich. Es wird gewährleistet, dass das Halterungsprofil immer passgenau an der Wand, dem Sockel oder Fußboden bzw. der Decke anliegt, ohne dass entsprechende Abstandshalter benötigt werden. Insbesondere wird damit eine geringe Abmessung des Heiz- bzw. Kühlsystems, d.h. ein geringer Abstand von der Wand oder Decke erreicht. Dies ist insbesondere wichtig im Altbau, wo derartige Systeme jetzt problemlos nachträglich eingebracht werden können. Die Abwinklungen oder Abkantungen weisen in diesem Zusammenhang wenigstens einen sich in Richtung auf das Inneren des Halterungsprofils erstreckenden oder aber wenigstens einen von dem Halterungsprofil wegweisenden bzw. sich weg erstreckenden abgewinkelten Schenkel auf.

Die Lösungen des Standes der Technik sind im Gegensatz zur hier beschriebenen Ausgestaltung platzaufwändig, und reduzieren aufgrund ihrer Aufbaumaße und insbesondere bei Anordnung einer Deckenheizung oder einer Fußbodenheizung, die Raumhöhe wesentlich. Dies kann dazu führen, dass sich Bauherren gegen eine solche Lösung entscheiden. Die beschriebene Ausführung löst dieses Problem in ausgezeichneter Weise und stellt ein System zur Verfügung, welches bei einem nachträglichen Einbau nur mit geringem Raumverlust verbunden ist.

In einer weiteren vorteilhaften Weiterbildung der erfindungsgemäßen Wand- oder Deckenverkleidung weist die Aufnahmeöffnung des Halterungsprofils eine Abdeckwand auf, die plan mit der Raumseite abschließt. Damit wird eine optisch unauffällige Bauform erreicht, in welcher die eigentlichen Rohrleitungen für den Betrachter nicht sichtbar sind.

Bei dieser Weiterbildung ist es von Vorteil, wenn die Abdeckwand eine vorgegebene Mindestdicke aufweist. Auf diese Art wird sichergestellt, dass in der Abdeckwand Befestigungsmittel wie Nägel und Schrauben verankert werden können, an denen weitere Gegenstände befestigt werden können.

Als Schutz vor mechanischer Verletzung ist eine Abdeckwand oder eine Auffüllung mit Füllmaterial in einem durch das erste Aufnahmemittel gebildeten Kanal vorgesehen. Zur Wärmeverteilung beziehungsweise zur Verbindung von einzelnen Teilen beziehungsweise Rohren des Rohrleitungsregisters weist das Rohrleitungsregister vorzugsweise wenigstens einen Adapter auf zum endseitigen Verbinden eines geraden Abschnitts beziehungsweise eines Teiles oder Rohres des Rohrleistungsregisters.

Dabei weist der Adapter vorzugsweise einen Außendurchmesser auf, der im wesentlichen dem Innendurchmesser des geraden Abschnitts entspricht, so dass durch Einschieben und/oder Eindrehen des Adapters in den geraden Abschnitt des Rohrleitungsregisters eine formschlüssige Verbindung zwischen dem Adapter und dem geraden Abschnitt des Rohrleitungsregisters hergestellt wird.

Bei einer Weiterentwicklung der erfindungsgemäßen Wand- oder Deckenverkleidung ist wenigstens ein Dichtungsmittel zwischen dem Adapter und dem geraden Abschnitt des Rohrleitungsregisters vorgesehen. Damit wird die Verbindung zwischen Adapter und Rohrleitungsregister zusätzlich abgesichert gegen Leckage.

Bei einer Weiterentwicklung der Wand- oder Deckenverkleidung ist wenigstens ein Klemmring zwischen dem Adapter und dem geraden Abschnitt des Rohrleitungsregisters vorgesehen zum Zentrieren und/oder Fixieren des Adapters in dem geraden Abschnitt. Auf diese Art und Weise wird die Montage der Wand- oder Deckenverkleidung vereinfacht, da der Anwender bei der Zentrierung der Verbindungen unterstützt wird.

Vorzugsweise ist der wenigstens ein Klemmring zwischen dem Adapter und dem geraden Abschnitt des Rohrleitungsregisters in einer Nut in einer Adapterwand des Adapters oder in einer Rohrleitungswand des geraden Abschnitts angeordnet, so dass der Klemmring beim Herausziehen des Adapters zwischen die Adapterwand und eine Rohrleitungswand des geraden Abschnitts gedrückt wird. Durch diesen Montagevorgang wird die Verbindung zwischen Rohrleitungsregister und Adapter zusätzlich stabilisiert.

Der Klemmring kann außerdem als Hohlkörper ausgebildet sein, der insbesondere mit einem Bindemittel gefüllt ist, das beim Platzen des Hohlkörpers austritt. Bei dieser Weiterentwicklung wird die Verbindung zwischen Rohrleitungsregister und Adapter dauerhaft stabilisiert.

Bei einer Weiterentwicklung der erfindungsgemäßen Wand- oder Deckenverkleidung weisen der Adapter ein selbstschneidendes Gewinde an seinem freien Ende und der gerade Abschnitt des Rohrleitungsregisters eine Engstelle auf, so dass der Adapter durch Drehbewegung mit dem geraden Abschnitt verbunden wird. Die schraubbare Verbindung hat den Vorteil, dass sie lösbar ist. Dies ist insbesondere von Vorteil, wenn nachträglich Veränderungen an dem Rohrleitungsregister vorgenommen werden sollen und beispielsweise Zwischenstücke eingesetzt werden sollen.

Alternativ zu der obigen Wand- oder Deckenverkleidung kann das selbstschneidende Gewinde an dem freien Ende des geraden Abschnitts des Rohrleitungsregisters angebracht sein und das Rohrregister einen im wesentlichen konstanten Innendurchmesser aufweisen. Dies vereinfacht die Herstellung des Rohrleitungsregisters und stellt einen besseren Zugang zu der Schraubverbindung sicher, so dass diese nachgedichtet werden kann oder ähnliches.

Wenn die letztgenannten Weiterentwicklungen der erfindungsgemäßen Wand- oder Deckenverkleidung mit einem Klemmring versehen sind, so ist der Klemmring vorzugsweise innerhalb oder an dem Gewinde angeordnet.

Um die Montage der erfindungsgemäßen Wand- oder Deckenverkleidung noch weiter zu vereinfachen, weist der Adapter insbesondere zwei gebogene Abschnitte auf, so dass zwei nebeneinander liegende gerade Abschnitte des Rohrleitungsregisters durch den Adapter verbindbar sind, wobei insbesondere der Adapter mehrteilig ausgebildet ist.

Das Halterungsprofil mit daran angeordneter Verkleidung kann in einer weiteren Ausführungsform auch als Fußbodenelement verwendet werden, welches statisch wirksam ist und, beispielsweise neben Estrich- oder Doppelbodenplatten, auch in der Lage ist geforderte (Verkehrs-)Lasten eines Raumes aufzunehmen. Das erfindungsgemäße System bestehend aus Halteprofil und daran angeordneter Verkleidung, erlaubt es somit erstmals, Heiz- und Kühlböden herzustellen, die eine geringe Aufbauhöhe aufweisen, statisch wirksam sind und es erlauben Hohlräume zwischen Tragelementen und/oder zum Beispiel (alten) Deckenbalken zu überspannen. Es kann somit ein thermisch optimal aktiviertes System mit revisionierbaren Hohlräumen gebildet werden. Aufgrund der Ausgestaltung und der niedrigen Aufbauhöhe zeigt das System ein kurzes Steuer- und Regelverhalten im Aufheiz- und Abkühlfall.

Ebenfalls möglich wird eine Unterteilung der Heiz- bzw. Kühlsysteme, die getrennt gesteuert bzw. geregelt werden oder einzelne Steuer-/Regelparzellen aufweisen.

Ein weiterer wesentlicher Vorteil der Erfindung ist darin zu sehen, dass die Halterungsprofile eine raumseitige Bestückung mit den Rohren bzw. Rohrleitungsregistern zulassen. Der Aufbau bzw. Anbau des Wand- oder Deckensystems bzw. der Wand- oder Deckenverkleidung gemäß der Erfindung wird somit wesentlich vereinfacht. Auch eine Nachrüstung bestehender Gebäude mit dem Wand-, Fußboden- oder Deckensystem bzw. der Wand- oder Deckenverkleidung ist möglich und kann in einfacher Art und Weise realisiert werden. Eine weitere alternative Ausführungsform sieht vor, dass die Wand-, Fußboden- oder Deckenverkleidung als Modul oder System vorgefertigt zur Verfügung gestellt wird. Diese Module oder Systeme können dann an bestehende Wände oder Fußböden angebaut werden. Eine bauseitige Herrichtung der Wand- oder Deckenverkleidungen kann somit unterbleiben. Insbesondere im Fertig- oder Trockenbau sowie bei der Renovierung oder Nachrüstung bestehender Gebäude erweist sich dies als vorteilhaft.

Die Erfindung wird nachfolgend anhand von Ausführungsbeispielen beschrieben.

Es zeigen:
- Fig. 1a: in Schnittdarstellung eine erste Ausführungsform eines Halterungsprofils der erfindungsgemäßen Wand- oder Deckenverkleidung,
- Fig. 1b: in Schnittdarstellung eine zweite Ausführungsform eines Halterungsprofils der erfindungsgemäßen Wand- oder Deckenverkleidung mit einem Befestigungsmittel,
- Fig. 1c: in Schnittdarstellung eine Ausführungsform der erfindungsgemäßen Wand- oder Deckenverkleidung,
- Fig. 2: in Schnittdarstellung eine dritte Ausführungsform eines Halterungsprofils der erfindungsgemäßen Wand- oder Deckenverkleidung,
- Fig. 3: in Schnittdarstellung eine vierte Ausführungsform eines Halterungsprofils der erfindungsgemäßen Wand- oder Deckenverkleidung,
- Fig. 4a: in Schnittdarstellung eine erste Ausführungsform der erfindungsgemäßen Verbindung zwischen dem Adapter und dem Rohrleitungsregister,
- Fig. 4b: in Schnittdarstellung eine zweite Ausführungsform der erfindungsgemäßen Verbindung Rohrleitungsregister,
- Fig. 4c: ein Rohrleitungsregister mit Adapter in Draufsicht,
- Fig. 4d: in Schnittdarstellung eine dritte Ausführungsform der erfindungsgemäßen Verbindung zwischen dem Adapter und dem Rohrleitungsregister und
- Fig. 5: in Schnittdarstellung eine weitere Ausführungsform des erfindungsgemäßen Adapters.

Fig. 1a zeigt in Schnittdarstellung eine erste Ausführungsform eines Halterungsprofils 1 der erfindungsgemäßen Wand- oder Deckenverkleidung. Das Halterungsprofil 1 umfasst einen Kanal 2. Der Kanal 2 weist auf der zu dem kühlenden beziehungsweise zu heizendem Raum zugewandten Seite eine Aufnahmeöffnung 21 auf, so dass der Kanal 2 ein Aufnahmemittel 18 für ein Rohrleitungsregister 6 des Kühl- und/oder Heizungssystems darstellt. Dadurch ist es möglich, einen geraden Abschnitt 22 des Rohrleitungsregisters 6 in das Halterungsprofil 1 zu integrieren; und zwar derart, dass es leicht von der Seite beziehungsweise von unten montierbar ist, da ja das Aufnahmemittel 18 auf einer Seite 17 geöffnet ist. Die Raumseite 17 ist die zu dem zu beheizenden beziehungsweise kühlenden Raum weisende Seite. Die ebenen Bereiche zwischen den einzelnen Kanälen 2 und ihren Aufnahmeöffnungen 21 dienen erfindungsgemäß als Auflagefläche 3 für die Abstützung und Befestigung von Deckplatten als Abstrahlplatte oder -schicht oder dergleichen.

Das Halterungsprofil 1 weist an seiner Kante eine Abwinklung 10 auf, mit der es an einer Decke oder Wand befestigt wird. An zwei einander gegenüberliegenden Seitenflächen 19, die sich parallel zu dem ersten Aufnahmemittel 18 erstrecken, weist das Halterungsprofil 1 eine jeweils konkave sickenartige Ausgestaltung auf, so dass zwischen zwei benachbarten Halterungsprofilen ein zweites Aufnahmemittel 20 für das Rohrleitungsregister 6 des Kühl- und/oder Heizungssystems gebildet wird. Auch dessen Aufnahmeöffnung 21 ist dem Raum zugewandt.

In Fig. 1b ist eine Schnittdarstellung einer zweiten Ausführungsform eines Halterungsprofils 1 der erfindungsgemäßen Wand- oder Deckenverkleidung mit einem Befestigungsmittel gezeigt. Diese Ausführungsform gleicht derjenigen aus Fig. 1a bis auf ein zusätzliches Befestigungsmittel 18a, das an einer Vertiefung des ersten Aufnahmemittels 18 angeordnet ist. In dem Profil ist besonders bevorzugt eine Sicke 18b eingearbeitet, die als Vertiefung für das Einbringen des Befestigungsmittels 18a dient.

Der Vorteil der erfindungsgemäßen Lösung gegenüber dem Stand der Technik wird aus Fig. 1c deutlich, die in Schnittdarstellung eine Ausführungsform der erfindungsgemäßen Wand- oder Deckenverkleidung zeigt. Bei der Anordnung mehrerer Halterungsprofile 1 nebeneinander lassen sich dank der erfindungsgemäßen Ausgestaltung der Seitenfläche 19 der einzelnen Profile 1 auch in den Zwischenräumen gerade Abschnitt 22 des Rohrleitungsregisters 6 anordnen. Auf diese Art ergänzen sich das erste Aufnahmemittel 18 und das zweite Aufnahmemittel 20 in idealer Weise, so dass sich ein sehr homogenes Wärmeprofil und/oder Kühlprofil erzeugen lässt.

Von der Ausbildung des zweiten Aufnahmemittels 20 zwischen den Halteprofilen 1 unbetroffen ist die Anordnung, Integrationsform und Abschlussform des geraden Abschnitts 22 in dem Halterungsprofil 1. In Fig. 2 und 3 sind zwei bevorzugte Alternativen der Integration des Rohrleitungsregisters 6 in einem Halterungsprofil 1 gezeigt. In Fig. 2 ist der gerade Abschnitt 22 in das erste Aufnahmemittel eingesetzt worden, und anschließend wurde der Kanal 2 mit einem Füllmaterial 23a aufgefüllt, bis der Kanal 2 plan mit der Auflagefläche 3 abschließt. In Fig. 3 wird der Kanal 2 mit einer Abdeckwand 23b abgeschlossen, ohne dass ein Abschnitt eingesetzt zu werden braucht.

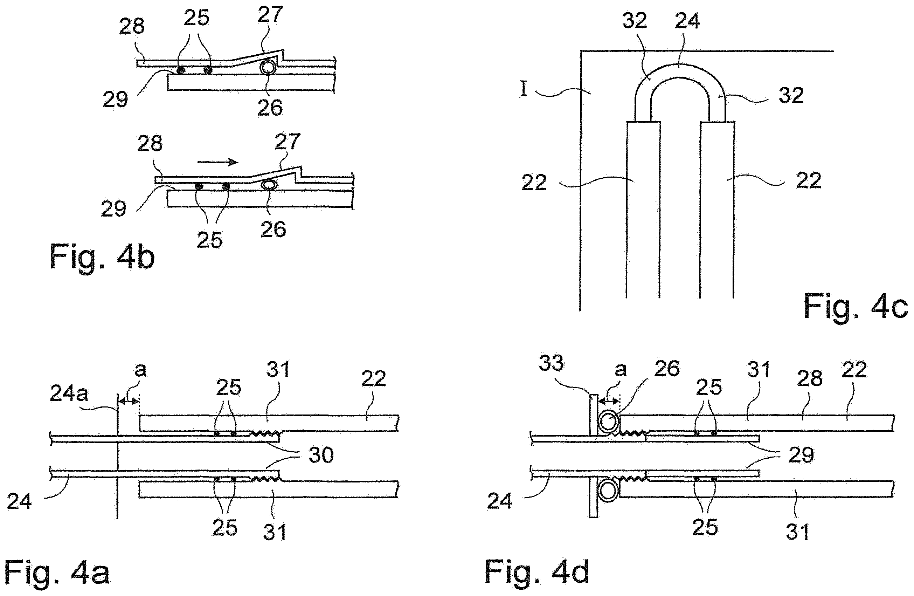

Die einzelnen geraden Abschnitte 22 des Rohrleitungsregisters 6 werden mittels Zwischenstücken beziehungsweise Adaptern miteinander verbunden. Eine erste Ausführungsform eines Adapters 24 und seiner Verbindung mit dem geraden Abschnitt 22 des Rohrleitungsregisters 6 ist in Fig. 4a in Schnittdarstellung gezeigt. Der Adapter 24, dessen Endabschnitt dargestellt ist, hat ein selbstschneidendes Gewinde 30 an seinem freien Ende. Mit dem Gewinde 30 wird der Adapter 24 in den geraden Abschnitt 22 gedreht, wo er an einer Engstelle 31 in dem geraden Abschnitt 22 ein Gewinde schneidet und so eine Verbindung zwischen Adapter 24 und Abschnitt 22 herstellt. Zusätzlich abgedichtet wird die Verbindung durch Dichtmittel, vorzugsweise zwei Dichtungsmittel 25, die die Dichtigkeit der Verbindung gegenüber Fluiden in den Rohrleitungen auch dann gewährleisten, wenn der Adapter 24 zwar einen Flansch 24a aufweist, dieser aber nicht unmittelbar auf die Rohrleitung 22 drückt, sondern einen Abstand "a" vom Ende der Rohrleitung einhält. Der Vorteil dieser Art der Verbindung besteht darin, dass die Verbindung dicht ist und trotzdem lösbar ist. Damit wird eine ausreichende Flexibilität gewährleistet, wenn das System gewartet oder erweitert werden soll.

Eine alternative Art der Verbindung zwischen dem Adapter 24 und dem Rohrleitungsregister 6 ist in Fig. 4b gezeigt. Wie aus der Schnittdarstellung ersichtlich, ist in einer Rohrleitungswand 28 des geraden Abschnitts 22 eine Nut 27 vorgesehen. In der Nut 27 ist ein Klemmring 26 angeordnet, über den der Adapter 24 geschoben wird, so dass sich der Klemmring 26 zwischen einer Adapterwand 29 des Adapters 24 und der Rohrleitungswand 28 des geraden Abschnitts 22 befindet und dort eingeklemmt wird. Um die Klemmwirkung und damit die Stabilität der Verbindung zwischen dem Adapter 24 und dem geraden Abschnitt 22 zu verbessern, wird der Adapter 24 zunächst in Richtung auf das Rohrleitungsregister 6 geschoben. Der Klemmring 26 kann dieser Bewegung nicht folgen, da er durch die Nut 27 an einer Position festgehalten wird. Nach dieser Bewegung wird der Adapter ein Stück weit wieder von dem Rohrleitungsregister 6 entfernt. Diesmal folgt der Klemmring 26 der Bewegung, da die Nut 27 wie dargestellt in dieser Richtung im Querschnitt rampenförmig ausgebildet ist. Da sich in dieser Richtung der Abstand zwischen Adapterwand 29 und Rohrleitungswand 28 verringert, wird der Klemmring 26 zwischen diesen beiden eingeklemmt und trägt so zu einer verbesserten Fixierung von Adapter 24 und Abschnitt 22 bei. Für eine zusätzliche Abdichtung der Verbindung sorgen zwei Dichtungsmittel 25, die den Rohrleitungsabschnitt umgeben und eng an der Adapterwand 29 anliegen. Diese Ausführungsform der Verbindung hat den Vorteil, dass der Adapter 24 bei der Befestigung nicht in eine Richtung gedreht werden muss, sondern in der gewünschten Einbaulage aufgesteckt werden kann. Außerdem ist diese Ausführungsform fertigungstechnisch einfacher herzustellen. Der Adapter 24 ist ferner an seinem in das Rohr eingreifenden Enden so ausgeführt, dass er sich leicht in das Rohr einschieben lässt und dass insbesondere auch die Dichtungen nicht beschädigt werden.

Die Anordnung von Adapter 24 und Abschnitt 22 des Rohrleitungsregisters 6 ist in Draufsicht in Fig. 4c gezeigt. Der Adapter 24 weist in der gezeigten Ausführungsform zwei gebogene Abschnitte 32 auf, so dass er im wesentlichen einen Halbkreis beschreibt, mit dem zwei parallele Abschnitte 22 verbunden werden. Diese Ausführungsform hat den Vorteil, dass wenig Bauraum beansprucht wird. Wie weiter unten erläutert wird, kann es jedoch andererseits erforderlich sein, den Adapter stattdessen aus mehreren geraden und gebogenen Abschnitten zusammenzusetzen, um die nötige Flexibilität zu gewährleisten, wenn der Abstand der Abschnitte 22 voneinander variabel ist.

Noch eine weitere Ausführungsform der Verbindung zwischen dem Adapter 24 und dem Abschnitt 22 ist in Fig. 4d gezeigt. Bei dieser Ausführungsform ist der Klemmring 26 außerhalb der Abschnitt 22 angeordnet. Er wird zwischen der Abschnitt 22 und einem muffenförmigen Ansatz eingeklemmt und erfüllt somit die gleiche Aufgabe wie in der Ausführungsform nach Fig. 4b. Der Klemmring 26 in Fig. 4d ist an dem Ende des Adapters 24 angeordnet. Damit der Klemmring 26 seine Funktion erfüllen kann, sind entsprechende flanschartige Presselemente 33 vorgesehen, auf denen sich der Klemmring 26 abstützt. Die flanschartigen Presselemente 33 weisen insbesondere vierkant- oder sechskantartige Ansätze auf, um ein gutes Einschrauben des Adapters zu gewährleisten. Die Ausführungsform in Fig. 4d zeichnet sich dadurch aus, dass der Adapter 24 von außen über das Rohr 22 geführt wird. Dabei wird vorausgesetzt, dass das Profil gemeinsam mit dem Rohr fertigungstechnisch abschließt. Dies ist beispielsweise dann der Fall, wenn ein Rohr in die Ausführungsformen nach Fig. 1a und 1b eingefügt wird oder dort ein Register defekt ist. Dann wird ein Abschnitt herausgetrennt, und dieser wird am Ende mit Adaptern versehen. Hierzu ist eine muffenartige Ausgestaltung des Adapters vorgesehen, der mittels entsprechender Verbindungsstücke miteinander gekoppelt wird.

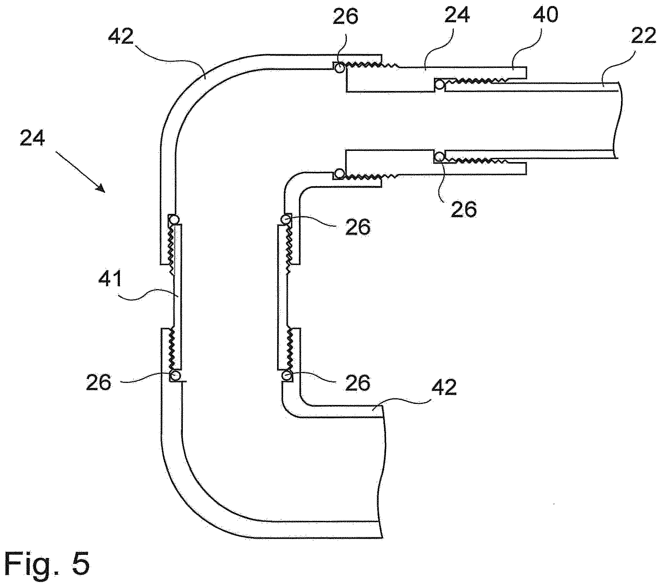

Wie oben bereits angedeutet kann der Adapter 24 mehrteilig aufgebaut sein, sowohl was seine Krümmungsradien betrifft als auch seine Zusammensetzung aus mehreren Einzelelementen. In Fig. 5 ist in Schnittdarstellung eine weitere Ausführungsform des erfindungsgemäßen Adapters in mehrteiligem Aufbau gezeigt.

Der Adapter 24 weist ein Übergangsstück 40 auf, das den Übergang zwischen dem Adapter 24 und dem Rohrleitungsregister 6 mit dem geraden Abschnitt 22 herstellt. Dazu hat das Übergangsstück 40 in der gezeigten Ausführungsform ein Innengewinde, das auf ein Außengewinde des geraden Abschnitts 22 aufgeschraubt wird. Das Übergangsstück 40 hat außerdem an seinem gegenüberliegenden Ende ein Außengewinde, auf das weitere Elemente des Adapters 24 aufgeschraubt werden können. Ein derartiges Element ist in der gezeigten Ausführungsform ein Krummstück 42, mit dem die Flussrichtung um 90° gegenüber der Zentralachse des Abschnitts 22 gedreht wird. Das Krummstück 42 weist folglich an einem Ende ein Innengewinde auf, mit dem es auf das Übergangsstück 40 geschraubt wird. An seinem anderen Ende weist das Krummstück 42 ein weiteres Innengewinde auf. In dieses zweite Innengewinde des Krummstücks 42 beziehungsweise Winkelstücks kann ein Zwischenstück 41 eingeschraubt werden, das an seinen beiden Enden ein Außengewinde aufweist. An dem freien Ende ist das Zwischenstück 41 beispielsweise mit einem weiteren Krummstück 42 verbunden, welches seinerseits mit einem weiteren Abschnitt 22 verbunden ist. Auf diese Art lässt sich in sehr flexibler Art und Weise die Verbindung zwischen mehreren Abschnitten 22 herstellen. Die als Krummstück beziehungsweise Winkelstück bezeichneten Bauelemente sind im Rohrleitungsbau auch als Fittings bekannt.

Der Vorteil dieser Ausführungsform besteht darin, dass beim Eindrehen des Adapters in eine Rohrleitung die mehrteilige Ausgestaltung es ermöglicht, die Bögen auf einen geraden Abschnitt aufzusetzen, so dass zwei Rohre miteinander verbunden werden können.

Die möglichen Ausführungsformen der Erfindung sind hier nicht erschöpfend dargestellt. Weitere Möglichkeiten der Umsetzung der Erfindung sind unter Berücksichtigung der oben genannten Prinzipien der Erfindung im folgenden kurz angedeutet. So ist vorzugsweise das Aufnahmemittel als Kanal ausgebildet, der in seiner Breite so bemessen ist, dass das Rohrleitungsregister aufgrund der Spannkraft des Materials des Halterungsprofils gehalten ist.

Dabei ist der Kanal insbesondere U-förmig ausgebildet und erstreckt sich in Richtung der Wand oder Decke beabstandet von wenigstens einer an dem Halterungsprofil vorgesehenen dem Raum zugewandten Auflagefläche für Deckplatten beziehungsweise Deckbahnen der Wand- oder Deckenverkleidung.

Zwei Auflageflächen sind erfindungsgemäß vorgesehen und das als Kanal ausgebildete Aufnahmemittel ist zwischen den beiden Auflageflächen, insbesondere mittig angeordnet. Zumindest weist das Aufnahmemittel auf seiner dem Raum abgewandten Seite eine Rundung auf, die der Rundung des Rohres entspricht beziehungsweise zu dieser korrespondiert.

Eine Weiterentwicklung besteht darin, dass an dem Halterungsprofil beziehungsweise der Deckplatte Befestigungselemente zur lösbar festen Befestigung der Deckplatte beziehungsweise Deckbahn an dem Halterungsprofil vorgesehen sind.

Die Wand- oder Deckenverkleidung wird in einer weiteren Ausführungsform dadurch weiterentwickelt, dass die Befestigungsmittel, klebende beziehungsweise selbstklebende, haftende beziehungsweise selbsthaftende und/oder magnetische Eigenschaften aufweisen und/oder als Befestigungselement ein Klettverschluss, vorzugsweise ein Klettband, eine Clipsverbindung, Schraubverbindung oder dergleichen vorgesehen ist und/oder der Kanal in seiner Tiefe so bemessen ist, dass durch die Deckplatten geführte Befestigungsmittel, wie zum Beispiel Schrauben mit selbstschneidenden Gewinde oder dergleichen, das Rohrleitungsregister nicht erreichten beziehungsweise beschädigen können.

Es ist ferner denkbar, dass an wenigstens einer der Auflageflächen ein Magnet, insbesondere als Magnetstreifen ausgebildet, vorgesehen ist, um Deckplatten aus magnetisch wirksamen Material, wie zum Beispiel Stahlblech oder -folie durch die Magnetkraft zu befestigen und/oder das Halterungsprofil aus magnetisch wirksamen Material gebildet ist und die Deckplatte einen korrespondierend dazu vorgesehenen Magnetstreifen aufweist. Dabei ist es bevorzugt, wenn der Magnet beziehungsweise Magnetstreifen auf der der Decke oder Wand zugewandten Seite des Halterungsprofiles angeordnet ist und im Einbauzustand zwischen dem Magneten und der Abdeckschicht das Halterungsprofil beziehungsweise die Seite des Profils als Auflage angeordnet ist. Diese Anordnung ist sehr geschickt, weil dadurch die zusätzliche Befestigung der Magnete entfallen kann, da er im Einbauzustand auf dem Halterungsprofil aufliegt.

Darüber hinaus kann als Deckplatte beziehungsweise -bahn eine Metallfolie, ein Blech, vorzugsweise farb- oder folienbeschichtet, eine Gipskarton- beziehungsweise Fermazellplatte, eine Kunststoff-, eine PCM-Platte (phase change material) oder dergleichen verwendet werden und/oder das Halterungsprofil an einer Unterkonstruktion befestigt werden, die die Verbindung zur Decke beziehungsweise Wand bildet.

Die Deckplatte beziehungsweise -bahn kann vorzugsweise aus magnetisch wirksamen Material gebildet sein und/oder aus transparentem Material, als Schallschutzelement mit Perforierung und/oder als Deckelement mit endgültiger Oberfläche, zum Beispiel mit Folienbeschichtung oder PCM-Beschichtung und/oder als Beleuchtungselement.

Das Halterungsprofil kann in beziehungsweise an einem Decken- oder Wandelement, zum Beispiel als Wellblech oder Trapezblechkonstruktion angeordnet werden.

Das Halterungsprofil kann in die Wellblech oder Trapezblechkonstruktion eingeformt werden, oder das Halterungsprofil kann in beziehungsweise an der Wellblechbeziehungsweise Trapezblechkonstruktion befestigt sein.

Das Aufnahmemittel für das Rohrleitungsregister kann sich in den Sicken der Trapez- beziehungsweise Wellblechkonstruktion befinden, das Rohrleitungsregister kann zur Aufnahme eines Heizbeziehungsweise Kühlsystems vorgesehen sein, das Rohrleitungsregister kann auch als brennstoffverbrennendes Objekt ausgebildet sein.

Das Rohrleitungsregister kann auch zumindest teilweise als Leerrohr für Kabel, Schläuche oder elektrische Heizleiter ausgebildet sein.

Das Halterungsprofil in der Trapez- beziehungsweise Wellblechkonstruktion kann statisch wirksam angeordnet sein, die Oberfläche der Trapez- beziehungsweise Wellblechkonstruktion kann mit statisch wirksamem Material bekleidet beziehungsweise kaschiert sein.

Die Trapez- beziehungsweise Wellblechkonstruktion kann elementartig aufgebaut sein, die gesamte Elementoberfläche, die dem Raum zugewandt ist, kann als Wärme- beziehungsweise Kältestrahler ausgebildet sein.

Zumindest die dem Raum zugewandte Seite der Trapezbeziehungsweise Wellblechkonstruktion kann mit einer wärmestrahlenden Beschichtung für eine Raumheizung nach dem Wärmestrahlungsprinzip oder wärmeabsorbierende Beschichtung zur Kühlung versehen sein, die Trapez- beziehungsweise Wellblechkonstruktion kann als Sandwichelement mit vorzugsweise integrierter Dämmmaterialschicht ausgebildet sein, das Dämmmaterial kann statisch wirksame Eigenschaften aufweisen, oder es kann eine Oberflächenbeschichtung vorgesehen sein, die vorzugsweise aus wärmeleitendem Material besteht.

## Patentansprüche

1. Wand- oder Deckenverkleidung mit einem Kühl- und/oder Heizungssystem, wobei die Wand- oder Deckenverkleidung wenigstens zwei Halterungsprofile (1) aufweist, mit welchen die Wand- oder Deckenverkleidung an der Wand oder Decke eines Bauwerkes befestigbar ist, wobei jedes der Halterungsprofile (1) auf einer zu dem zu kühlenden beziehungsweise zu heizenden Raum zugewandten Raumseite (17) ein erstes Aufnahmemittel (18) für ein Rohr oder Rohrleitungsregister (6) des Kühl- und/oder Heizungssystems aufweist, dessen Aufnahmeöffnung dem Raum zugewandt ist, wobei das Rohrleitungsregister (6) wenigstens zwei gerade Abschnitte (22) aufweist, welche mit dem jeweiligen ersten Aufnahmemittel (18) in dem jeweiligen Halterungsprofil (1) fest zu einem integralen Bauteil verbunden sind, wobei jeder gerade Abschnitt (22) des Rohrleitungsregisters (6) und das jeweilige Halterungsprofil (1) ein gemeinsames Profil bilden, welches in einem einzigen Fertigungsprozess, nämlich im Strangpressverfahren, herstellbar ist, wobei jedes der Halterungsprofile (1) zwei Auflageflächen (3) aufweist und das als Kanal (2) ausgebildete Aufnahmemittel (18) zwischen den beiden Auflageflächen (3) angeordnet ist,
wobei die ebenen Bereiche zwischen den einzelnen Kanälen (2) und ihren Aufnahmeöffnungen als die Auflageflächen (3) für die Abstützung und Befestigung von Deckplatten als Abstrahlplatte oder -schicht dienen, **dadurch gekennzeichnet, dass** jedes Halterungsprofil (1) an zwei gegenüberliegenden Seitenflächen (19), die sich parallel zu dem ersten Aufnahmemittel (18) erstrecken, eine jeweils konkave sickenartige Ausgestaltung aufweist, so dass zwischen zwei benachbarten Halterungsprofilen (1) ein zweites Aufnahmemittel (20) für das Rohrleitungsregister (6) des Kühl-und/oder Heizungssystems gebildet wird, dessen Aufnahmeöffnung dem Raum zugewandt ist.

2. Wand- oder Deckenverkleidung nach Anspruch 1, **dadurch gekennzeichnet, dass** der Abschnitt (22) als Rohr ausgebildet ist.

3. Wand- oder Deckenverkleidung nach einem der Ansprüche 1 oder 2, **dadurch gekennzeichnet, dass** der Abschnitt (22) am Umfang mit dem Halterungsprofil (1) zumindest teilweise thermisch wirksam verbunden ist, wobei eine Kontaktfläche am Umfang gebildet wird, die zwischen 50-100 % der Umfangsfläche des Abschnitts (22) beträgt.

4. Wand- oder Deckenverkleidung nach einem der Ansprüche 1 bis 3, **dadurch gekennzeichnet, dass** das Halterungsprofil (1) und/oder eine mit dem Halterungsprofil (1) verbundene Unterkonstruktion thermisch aktivierbar ist.

5. Wand- oder Deckenverkleidung nach einem der Ansprüche 1 bis 4, **dadurch gekennzeichnet, dass** das Halterungsprofil (1) mittels entsprechender Befestigungsmittel (18a) entweder direkt an einer Unterkonstruktion, wie zum Beispiel einer Wand oder Decke, oder aber als abgehängte Konstruktion anordenbar bzw. befestigbar ist und/oder ein Befestigungsmittel (18a) in einer Vertiefung des ersten Aufnahmemittels (18) anordenbar ist und/oder dadurch, dass das Halterungsprofil (1) an seiner Kante eine Abwinklung (10) aufweist, mittels derer es an einer Decke oder Wand anlegbar, insbesondere befestigbar ist.

6. Wand- oder Deckenverkleidung nach einem der vorhergehenden Ansprüche, **dadurch gekennzeichnet, dass** die Aufnahmeöffnung (21) des Halterungsprofils (1) eine Abdeckwand (23b) aufweist, die plan mit der Raumseite (17) abschließt, wobei bevorzugt die Raumseite (17) als Auflage für eine wärmestrahlende Schicht zur Heizung oder wärmeabsorbierende Schicht zur Kühlung vorgesehen ist und/oder ein Magnet oder Magnetstreifen auf der der Wand oder Decke des Bauwerkes zugewandten Seite angeordnet ist, um als Befestigungsmittel für eine magnetisch wirksame Abdeckplatte beziehungsweise Abdeckschicht zu dienen, wobei im Einbauzustand das Halterungsprofil (1) zwischen dem Magneten beziehungsweise Magnetstreifen und der Abdeckplatte angeordnet ist.

7. Wand- oder Deckenverkleidung nach einem der vorhergehenden Ansprüche, **dadurch gekennzeichnet, dass** die Abdeckwand (23b) eine vorgegebene Mindestdicke aufweist.

8. Wand- oder Deckenverkleidung nach einem der vorhergehenden Ansprüche, **dadurch gekennzeichnet, dass** als Schutz vor mechanischer Verletzung eine Abdeckwand (23b) oder eine Auffüllung mit Füllmaterial (23a) in einem durch das erste Aufnahmemittel (18) gebildeten Kanal (2) vorgesehen ist und/oder zur Wärmeverteilung beziehungsweise Verbindung von einzelnen Rohren des Rohrleitungsregisters (6) wenigstens ein Adapter (24) vorgesehen ist zum endseitigen Verbinden eines geraden Abschnitts (22) beziehungsweise eines Rohres des Rohrleistungsregisters (6), wobei bevorzugt der Adapter einen Außendurchmesser aufweist, der im wesentlichen dem Innendurchmesser des geraden Abschnitts (22) entspricht, so dass durch Einschieben und/oder Eindrehen des Adapters (24) in den geraden Abschnitt (22) des Rohrleitungsregisters (6) eine formschlüssige Verbindung zwischen dem Adapter (24) und dem geraden Abschnitt des Rohrleitungsregisters (6) hergestellt wird.

9. Wand- oder Deckenverkleidung nach Anspruch 8, **dadurch gekennzeichnet, dass** wenigstens ein Dichtungsmittel (25) zwischen dem Adapter (24) und dem geraden Abschnitt (22) des Rohrleitungsregisters (6) vorgesehen ist und/oder der Adapter (24) ein selbstschneidendes Gewinde (30) an seinem freien Ende und der gerade Abschnitt (22) des Rohrleitungsregisters (6) eine Engstelle (31) aufweisen, so dass der Adapter (24) durch Drehbewegung mit dem geraden Abschnitt (22) verbunden wird.

10. Wand- oder Deckenverkleidung nach einem der Ansprüche 8 oder 9, **dadurch gekennzeichnet, dass** wenigstens ein Klemmring (26) zwischen dem Adapter (24) und dem geraden Abschnitt (22) des Rohrleitungsregisters (6) vorgesehen ist zum Zentrieren und/oder Fixieren des Adapters (24) in dem geraden Abschnitt (22) und/oder der wenigstens eine Klemmring (26) zwischen dem Adapter (24) und dem geraden Abschnitt (22) des Rohrleitungsregisters (6) in einer Nut (27) in einer Rohrleitungswand (28) des geraden Abschnitts (22) angeordnet ist, so dass der Klemmring (26) beim Herausziehen des Adapters (24) zwischen die Adapterwand (29) und eine Rohrleitungswand (28) des geraden Abschnitts (22) gedrückt wird.

11. Wand- oder Deckenverkleidung nach Anspruch 10, **dadurch gekennzeichnet, dass** der Klemmring (26) als Hohlkörper ausgebildet ist, der insbesondere mit einem Bindemittel gefüllt ist, das beim Platzen des Hohlkörpers austritt.

12. Wand- oder Deckenverkleidung nach einem der Ansprüche 1 bis 10, **dadurch gekennzeichnet, dass** das selbstschneidende Gewinde (30) an dem freien Ende des geraden Abschnitts (22) des Rohrleitungsregisters (6) angebracht ist und das Rohrregister einen im wesentlichen konstanten Innendurchmesser aufweist.

13. Wand- oder Deckenverkleidung nach dem vorhergehenden Anspruch in Verbindung mit Anspruch 10, **dadurch gekennzeichnet, dass** der Klemmring (26) innerhalb oder an dem Gewinde (30) angeordnet ist.

14. Wand- oder Deckenverkleidung nach Anspruch 8 oder einem davon abhängigen Anspruch, **dadurch gekennzeichnet, dass** der Adapter (24) zwei gebogene Abschnitte (32) aufweist, so dass zwei nebeneinander liegende gerade Abschnitte (22) des Rohrleitungsregisters (6) durch den Adapter (24) verbindbar sind, insbesondere der Adapter (24) mehrteilig ausgebildet ist.

15. Wenigstens eine Wand- oder Deckenverkleidung gemäß einem der Ansprüche 1 bis 14 umfassendes, insbesondere vorgefertigtes Modul.

## Claims

1. Wall or ceiling cladding with a cooling and/or heating system, wherein the wall or ceiling cladding has at least two mounting profiles (1) by means of which the wall or ceiling cladding is attachable to the wall or ceiling of a building, wherein on a room side (17) facing the room that is to be cooled or heated each of the mounting profiles (1) has a first receiving element (18) for a pipe or a pipe register (6) of the cooling and/or heating system, and its receiving hole faces the room, wherein the pipe register (6) has at least two straight sections (22) connected fixedly with the respective first receiving element (18) in the respective mounting profile (1) to form an integral component, wherein each straight section (22) of the pipe register (6) and the respective mounting profile (1) form a common profile that can be manufactured in a single manufacturing process, namely extrusion process, wherein each of the mounting profiles (1) has two support surfaces (3) and the receiving element (18) formed as a channel (2) is arranged between the two support surfaces (3), wherein the planar regions between the individual channels (2) and their receiving holes serve as the support surfaces (3) for supporting and fastening cover plates as radiating plate or layer, **characterized in that** on two opposite lateral surfaces (19) extending parallel to the first receiving element (18) each mounting profile (1) has a concave bead-like configuration, so that between two adjacent mounting profiles (1) there is formed a second receiving element (20) for the pipe register (6) of the cooling and/or heating system, and its receiving hole faces the room.

2. Wall or ceiling cladding according to Claim 1, **characterized in that** the section (22) is formed as a pipe.

3. Wall or ceiling cladding according to one of Claims 1 or 2, **characterized in that** the section (22) is connected at least partly thermally actively at the circumference with the mounting profile (1), wherein at the circumference a contact surface forms that is between 50 and 100 % of the circumference surface of section (22) .

4. Wall or ceiling cladding according to one of Claims 1 to 3, **characterized in that** the mounting profile (1) and/or a sub-construction connected with the mounting profile (1) is thermally activatable.

5. Wall or ceiling cladding according to one of Claims 1 to 4, **characterized in that** the mounting profile (1) can be either directly arranged at or attached to a sub-construction, such as, for example, a wall or a ceiling, or else as suspended construction, by means of suitable fastening elements (18a), and/or a fastening element (18a) is arrangeable in a recess of the first mounting element (18), and/or **in that** the mounting profile (1) has an angular deflection (10) at its edge by means of which it can be put on or in particular attached to a ceiling or wall.

6. Wall or ceiling cladding according to one of the preceding claims, **characterized in that** the receiving hole (21) of the mounting profile (1) has a cover wall (23b) ending flatly with the room side (17), wherein preferably the room side (17) is provided as support for a thermally radiating layer for heating or a heat-absorbing layer for cooling, and/or a magnet or magnetic strip is arranged on the side facing the wall or ceiling of the building in order to serve as fastening element for a magnetically active cover plate or cover layer, wherein, when installed, the mounting profile (1) is arranged between the magnet or magnetic strip and the cover plate.

7. Wall or ceiling cladding according to one of the preceding claims, **characterized in that** the cover wall (23b) has a predetermined minimum thickness.

8. Wall or ceiling cladding according to one of the preceding claims, **characterized in that** for protection against mechanical damage a cover wall (23b) or filling with fill material (23a) is provided in a channel (2) formed by the first receiving element (18), and/or for spreading heat or connecting of single pipes of the pipe register (6) at least one adapter (24) is provided for connecting the end of a straight section (22) or pipe of the pipe register (6), wherein preferably the adapter has an exterior diameter corresponding essentially with the interior diameter of the straight section (22), so that, when the adapter (24) is inserted and/or screwed in the straight section (22) of the pipe register (6), the result will be a positive locking connection between the adapter (24) and the straight section of the pipe register (6).

9. Wall or ceiling cladding according to Claim 8, **characterized in that** at least one sealing element (25) is provided between the adapter (24) and the straight section (22) of the pipe register (6), and/or the adapter (24) has on its free end a self-cutting thread (30), and the straight section (22) of the pipe register (6) has a bottleneck (31), so that the adapter (24) is linked to the straight section (22) by a rotational movement.

10. Wall or ceiling cladding according to one of Claims 8 or 9, **characterized in that** at least one clamping ring (26) is provided between the adapter (24) and the straight section (22) of the pipe register (6) for centering and/or fixing the adapter (24) in the straight section (22), and/or the at least one clamping ring (26) is arranged between the adapter (24) and the straight section (22) of the pipe register (6) in a groove (27) in a pipe wall (28) of the straight section (22), so that, when the adapter (24) is pulled out, the clamping ring (26) is pressed between the adapter wall (29) and a pipe wall (28) of the straight section (22).

11. Wall or ceiling cladding according to Claim 10, **characterized in that** the clamping ring (26) is designed as hollow body filled in particular with a binding agent that leaks out when the hollow body bursts.

12. Wall or ceiling cladding according to one of Claims 1 to 10, **characterized in that** the self-cutting thread (30) is placed at the free end of the straight section (22) of the pipe register (6), and the pipe register has an essentially constant interior diameter.

13. Wall or ceiling cladding according to the preceding claim in connection with Claim 10, **characterized in that** the clamping ring (26) is arranged within or at the thread (30).

14. Wall or ceiling cladding according to Claim 8 or a claim depending on it, **characterized in that** the adapter (24) has two bent sections (32), so that two adjacent straight sections (22) of the pipe register (6) are linkable by the adapter (24), in particular the adapter (24) is designed in several parts.

15. In particular prefabricated module comprising at least one wall or ceiling cladding according to one of Claims 1 to 14.

## Revendications

1. Revêtement de mur ou de plafond comprenant un système de refroidissement et/ou de chauffage, le revêtement de mur ou de plafond comprenant au moins deux profilés de fixation (1) qui permettent de fixer le revêtement de mur ou de plafond au mur ou au plafond d'une construction, chacun des profilés de fixation (1) comportant sur un côté (17) dirigé vers la pièce à refroidir ou à chauffer un premier moyen de réception (18) qui est destiné à un tube ou un registre de canalisation (6) du système de refroidissement et/ou de chauffage et dont l'ouverture de réception est dirigée vers la pièce, le registre de canalisation (6) comportant au moins deux parties rectilignes (22) qui sont reliées de façon fixe au moyen de réception (18) dans le profilé de fixation respectif (1) pour former un élément de construction intégral, chaque partie rectiligne (22) du registre de canalisation (6) et le profilé de fixation respectif (1) formant un profilé commun qui peut être fabriqué en un seul processus de fabrication, à savoir dans un procédé d'extrusion, chacun des profilés de fixation (1) comportant deux surfaces d'appui (3) et le moyen de réception (18), conçu comme un canal (2), étant disposé entre les deux surfaces d'appui (3),
les zones planes situées entre les canaux individuels (2) et leurs ouvertures de réception servant de surfaces d'appui (3) destinées au support et à la fixation de plaques de plafond telles qu'une plaque ou couche de rayonnement, **caractérisé en ce que**
chaque profilé de fixation (1) présente au niveau de deux surfaces latérales opposées (19), qui s'étendent parallèlement au premier moyen de réception (18), une conformation concave de type moulure de manière à former entre deux profilés de fixation (1) adjacents un deuxième moyen de réception (20) qui est destiné au registre de canalisation (6) du système de refroidissement et/ou de chauffage et dont l'ouverture de réception est dirigée vers la pièce.

2. Revêtement de mur ou de plafond selon la revendication 1, **caractérisé en ce que** la partie (22) a la forme d'un tube.

3. Revêtement de mur ou de plafond selon l'une des revendications 1 ou 2, **caractérisé en ce que** la partie (22) est reliée fonctionnellement de manière au moins partiellement thermique au niveau de la circonférence au profilé de fixation (1), une surface de contact qui représente entre 50 et 100 % de la surface de circonférence de la partie (22) étant formée au niveau de la circonférence.

4. Revêtement de mur ou de plafond selon l'une des revendications 1 à 3, **caractérisé en ce que** le profilé de fixation (1) et/ou une infrastructure, reliée au profilé de fixation (1), peuvent être activés thermiquement.

5. Revêtement de mur ou de plafond selon l'une des revendications 1 à 4, **caractérisé en ce que** le profilé de fixation (1) peut être disposé ou fixé à l'aide de moyens de fixation appropriés (18a) soit directement au niveau d'une infrastructure comme par exemple un mur ou un plafond, soit sous la forme d'une construction suspendue et/ou **en ce qu'**un moyen de fixation (18a) peut être disposé dans un évidement du premier moyen de réception (18) et/ou **en ce que** le profilé de fixation (1) comporte au niveau de son bord un coude (10) permettant de le placer en appui, et en particulier de le fixer, au plafond ou au mur.

6. Revêtement de mur ou de plafond selon l'une des revendications précédentes, **caractérisé en ce que** l'ouverture de réception (21) du profilé de fixation (1) comporte une paroi de recouvrement (23b) formant un seul plan avec le côté pièce (17), et de préférence le côté pièce (17) étant prévu comme support pour une couche rayonnant la chaleur pour le chauffage ou une couche absorbant la chaleur pour le refroidissement et/ou un aimant ou une bande magnétique étant disposé (e) du côté dirigé vers le mur ou le plafond de la construction afin de servir de moyen de fixation d'une plaque de recouvrement magnétique ou d'une couche de recouvrement magnétique, le profilé de fixation (1) étant disposé à l'état monté entre l'aimant ou la bande magnétique et la plaque de recouvrement.

7. Revêtement de mur ou de plafond selon l'une des revendications précédentes, **caractérisé en ce que** la paroi de recouvrement (23b) a au moins une épaisseur minimale spécifiée.

8. Revêtement de mur ou de plafond selon l'une des revendications précédentes, **caractérisé en ce qu'**une paroi de recouvrement (23b) ou un remplissage avec un matériau de remplissage (23a) dans un canal (2) formé par le premier moyen de réception (18) est prévu(e) comme moyen de protection contre un endommagement mécanique et/ou au moins un adaptateur (24) est prévu pour distribuer la chaleur ou relier des tubes individuels du registre de canalisation (6) pour le raccordement aux extrémités d'une partie rectiligne (22) ou d'un tube du registre de canalisation (6), l'adaptateur ayant de préférence un diamètre externe qui correspond essentiellement au diamètre interne de la partie rectiligne (24) de sorte que l'insertion par coulissement et/ou rotation de l'adaptateur (24) dans la partie rectiligne (22) du registre de canalisation (6) permette de réaliser une liaison par complémentarité de formes entre l'adaptateur (24) et la partie rectiligne du registre de canalisation (6).

9. Revêtement de mur ou de plafond selon la revendication 8, **caractérisé en ce qu'**au moins un moyen d'étanchéité (25) est prévu entre l'adaptateur (24) et la partie rectiligne (22) du registre de canalisation (6) et/ou **en ce que** l'adaptateur (24) comporte à son extrémité libre un filetage auto-taraudeur (30) et la partie rectiligne (22) du registre de canalisation (6) comporte un rétrécissement (31) afin de relier l'adaptateur (24) par rotation à la partie rectiligne (22) .

10. Revêtement de mur ou de plafond selon l'une des revendications précédentes 8 ou 9, **caractérisé en ce qu'**au moins une bague de serrage (26) est prévue entre l'adaptateur (24) et la partie rectiligne (22) du registre de canalisation (6) afin de centrer et/ou fixer l'adaptateur (24) dans la partie rectiligne (22) et/ou **en ce que** l'au moins une bague de serrage (26) est disposée entre l'adaptateur (24) et la partie rectiligne (22) du registre de canalisation (6) dans une gorge (27) ménagée dans une paroi de canalisation (28) de la partie rectiligne (22) de sorte que la bague de serrage (26) soit pressée entre la paroi (29) de l'adaptateur et une paroi de canalisation (28) de la partie rectiligne (22) lors du retrait de l'adaptateur (24) .

11. Revêtement de mur ou de plafond selon la revendication 10, **caractérisé en ce que** la bague de serrage (26) est conçue comme un corps creux qui est en particulier rempli d'un liant qui s'échappe lors de l'éclatement du corps creux.

12. Revêtement de mur ou de plafond selon l'une des revendications 1 à 10, **caractérisé en ce que** le filetage auto-taraudeur (30) est fixé à l'extrémité libre de la partie rectiligne (22) du registre de canalisation (6) et **en ce que** le registre de canalisation a un diamètre intérieur sensiblement constant.

13. Revêtement de mur ou de plafond selon la revendication précédente et en lien avec la revendication 10, **caractérisé en ce que** la bague de serrage (26) est disposée à l'intérieur ou au niveau du filetage (30).

14. Revêtement de mur ou de plafond selon la revendication 8 ou selon une revendication dépendant de celle-ci, **caractérisé en ce que** l'adaptateur (24) comporte deux parties coudées (32) afin de pouvoir relier deux parties rectilignes (22), situées côte à côte, du registre de canalisation (6) par l'adaptateur (24) et en particulier **en ce que** l'adaptateur (24) est conçu en plusieurs parties.

15. Module, en particulier module préfabriqué, comprenant au moins un revêtement de mur ou de plafond selon l'une des revendications 1 à 14.
